# EUROPÄISCHE PATENTANMELDUNG

(11) **EP 1 529 882 A1**
(43) Veröffentlichungstag der Anmeldung: **11.05.2005**
(21) Anmeldenummer: 04025273.6
(22) Anmeldetag: 25.10.2004
(51) Int. Cl.: E01C 11/24, E01C 5/18, B29C 39/02, A43B 13/22, A47G 27/02, A47G 27/04

(54) **Nassrutschfeste Oberfläche und Verfahren zu ihrer Herstellung**

(30) Priorität: 05.11.2003 DE 10352204
(71) Anmelder: SRB Sonder-und Rationaliserungsberatung Gesellschaft für Engineering und Schutzrechtverwertung mbH, 30966 Hemmingen (DE)
(72) Erfinder: Beckmann, Werner, 30966 Hemmingen (DE)
(74) Vertreter: Eikenberg, Kurt-Rudolf, Dr. Dipl.-Chem.

(57) **Zusammenfassung**

Die Erfindung betrifft eine (vorzugsweise aus einem Gummimaterial bestehende) profilierte Oberfläche und zeichnet sich dadurch aus, daß die Profilierung mit Hinterschneidungen (4) versehene Ausnehmungen (3) besitzt.

Die Profilierung ist durch den Abdruck eines Gewebes oder eine Gewebe-Nachbildung gebildet, und zwar dadurch, daß der Boden einer Form mit einer Bahn aus dem besagten Gewebe bedeckt wird, das Material der Oberfläche in die Form eingebracht wird, dann - ggfs. nach einer gewissen Abbindezeit - zusammen mit dem darin oberflächlich eingebetteten Gewebe der Form entnommen wird und schließlich das Gewebe von der Materialoberfläche abgezogen wird. Dabei kann ein Gewebe mit einer Maschenweite im Bereich von 0,05 bis 5 mm aus Aramidfasern verwendet werden. Es kann aber auch mit Hilfe einer Metallschmelze zunächst eine Nachbildung des Gewebes hergestellt und diese Nachbildung dann zum Erzeugen der Struktur der Oberfläche verwendet werden.

## Beschreibung

Die Erfindung betrifft eine naßrutschfeste Oberfläche und gibt zugleich ein bevorzugtes Verfahren zu ihrer Herstellung an.

Bei vielen Oberflächen beispielsweise von Gehwegplatten insbesondere solchen aus einer Gummimischung oder vergleichbaren Materialien ist zu beobachten, daß die Rutschsicherheit zwar bei trockener Oberfläche gewährleistet ist, trotz Profilierung sich bei Nässe jedoch deutlich vermindert und nicht ausreichende Werte annimmt. Hier soll die Erfindung Abhilfe schaffen.

Erfindungsgemäß wird eine mit einer Profilierung versehene Oberfläche vorgeschlagen, bei der die Profilierung mit Hinterschneidungen versehene Ausnehmungen besitzt. Zweckmäßig ist die Profilierung durch den Abdruck eines Gewebes gebildet. Das Gewebe kann dabei Leinenbindung (Kette und Schuss) aufweisen und besitzt vorzugsweise eine Maschenweite im Bereich von 0,05 bis 5 mm.

Zur Herstellung einer solchen Oberfläche kann zweckmäßig so vorgegangen werden, daß der Boden einer Form mit einer Bahn aus dem besagten Gewebe bedeckt wird, die Gummimischung in die Form eingebracht und - ggfs. nach einer gewissen Abbindezeit - zusammen mit dem dann in die Oberfläche der Gummimischung eingebettetten Gewebe der Form entnommen wird und schließlich das Gewebe von der Gummimischung abgezogen wird.

Der Erfolg dieser Maßnahme ist verblüffend. Durch das von dem Gummi abgezogene Gewebe erhält die Gummioberfläche eine feintexturierte Struktur, die man in erster Näherung als Abdruck des Gewebes bezeichnen kann. Tatsächlich nimmt die Oberfläche des Gummis beim Abzug des Gewebes aber auch eigene Strukturen an, die u.a. etwas von der Viskosität und Elastizität der Gummimischung im Augenblick des Abzugs des Gewebes und der Maschengröße des Gewebes abhängen. Diese eigenen Strukturen in der Oberfläche schließen u.a. stärkere Erhebungen, unterschiedliche Hinterschneidungen und dgl. Unregelmäßigkeiten ein und sorgen für einen so starken Anstieg der Naßrutschsicherheit des Gummis, wie es bislang noch nicht beobachtet werden konnte. Dies hat noch weitere Vorteile zur Folge. So lässt sich das Gummi sehr gut reinigen und ist weniger empfindlich gegen Fette und Öle.

Das Einsatzgebiet einer solchen Oberfläche ist äußerst vielgestalltig. Neben den schon erwähnten Gehwegplatten kommt sie überall dort zum Einsatz, wo ebene oder geneigte Flächen, insbesondere die ein erhöhtes Gefahrenpotential besitzen, begangen oder befahren werden und naßrutschfest ausgebildet sein müssen. Als Beispiele seien genannt schräge Rampen, Bahnübergänge oder das Deck von Schiffen. Die erfindungsgemäße Oberfläche muß sich auch nicht unbedingt auf den begangenen Flächen befinden, sondern kann sich umgekehrt auch auf den Sohlen der Schuhe befinden, mit denen solche Flächen begangen werden. Auch dies ergibt den starken Anstieg der Naßrutschsicherheit.

Das Material der Oberfläche ist bevorzugt, wie schon erwähnt, eine Gummimischung, kann aber auch ein Hart-PVC, ein Polyethylen oder ein vergleichbares Material sein. Auch die Basisform der Oberfläche spielt für die Erfindung keine Rolle. Die Oberfläche kann z.B. flach oder auch gewölbt sein oder, wie in den Gebrauchsmustern DE-U 90 05 811.9, DE-U 91 05 822.8 oder DE-U 92 08 220.3 beschrieben, mit sich über die Breite erstreckten Stegen versehen sein, um dauerhaft Blindenleitstreifen zu erstellen.

Von dem Material der Gewebes wird nur gefordert, daß es gegenüber dem Material der Oberfläche, also z.B. dem Gummi beständig sein muß und sich nicht z.B. darin auflösen darf. Bewährt hat sich in diesem Sinne ein Gewebe aus Aramidfasern. Auch muß sich das Gewebe gut aus der Oberfläche trennen lassen, was sich bei Bedarf leicht dadurch unterstützen lässt, daß das Gewebe vor dem Einlegen in die Form mit Silikon eingesprüht wird.

Aramidfasern sind zwar eine gute Materialauswahl für das Gewebe, zeigen gegenüber dem Material der Oberfläche häufig aber doch gewisse Mängel. Dem kann dadurch entgegen gewirkt werden, daß mit Hilfe einer Metallschmelze, z.B. Aluminium, zunächst eine Nachbildung des Gewebes hergestellt und diese Nachbildung dann zum Erzeugen der Struktur der Oberfläche verwendet wird.

Ein Ausführungsbeispiel der Erfindung ist in stark schematischer Schnittdarstellung in der Zeichnung dargestellt. Dabei zeigen:
- Fig. 1: eine Materialbahn mit eingelegtem Gewebe, und
- Fig. 2: die gleiche Materialbahn nach Abzug des Gewebes.

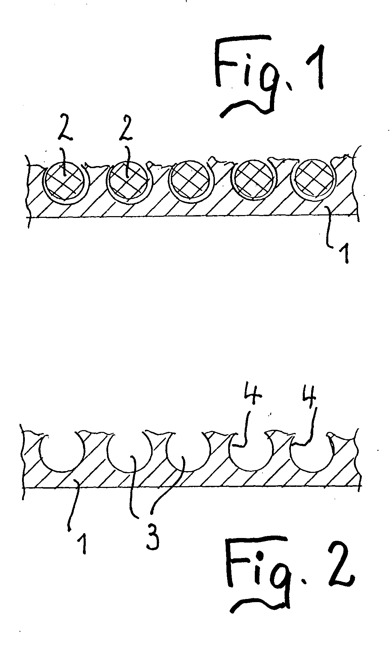

in Fig. 1 ist eine Materialbahn 1 aus einem hartelastischen Material wie Gummi dargestellt, in deren Oberfläche ein Gewebe 2 eingelegt ist. Das Gewebe 2 mag z.B. Leinenbindung besitzen, und in Fig. 1 sind nur dessen Kettfäden erkennbar.

Die Herstellung der Struktur gemäß Fig. 1 geschieht zweckmäßig derart, daß das Gewebe 2 in den Boden einer nicht weiter dargestellten Form eingelegt und dann das Material der Bahn 1 in die Form eingegossen wird. Das eingegossene Material umfließt bei diesem Vorgang das Gewebe derart, daß das Gewebe 2 oberflächlich in das Material 1 eingebettet wird. Nach Entnahme des Materials aus der Form ergibt sich die in Fig. 1 gezeigte Struktur.

Sodann wird das Gewebe 2 von der Oberfläche der Materialbahn abgezogen, mit der Folge, daß sich die in Fig. 2 dargestellte Struktur ergibt. Es ist zu erkennen, daß die Oberfläche der Materialbahn 1 nunmehr Ausnehmungen 3 aufweist, deren Form der Form des eingebettet gewesenen Gewebes entspricht. Diese Ausnehmungen weisen - und das ist ein sehr wichtiges Merkmal - Hinterschneidungen 4 auf, die für die erreichte Naßrutschfestigkeit von entscheidender Bedeutung sind.

Als Gewebe 2 hat sich ein Gewebe aus Aramid-Fasern mit einer Maschenweise von etwa 0,5 - 5 mm gut bewährt. Zweckmäßig wird das Gewebe vor dem Eingießen des Gummimaterials in die Form noch silikonisiert, um die Haftung zum Gummi zu verringern. Anstelle des Aramids kann auch jedes andere Gewebematerial verwendet werden, sofern es gegenüber dem Gummi beständig ist und eine möglichst große Phobie zum Gummi aufweist.

Aramid erfüllt die Ansprüche an ein für die Zwecke der Erfindung brauchbares Gewebe zwar gut, aber nicht optimal. Es wurde gefunden, daß ein Aramid-Gewebe nach mehrmaligen Gebrauch zunehmend unwirksam wird, sei es durch Vergang oder durch Zusetzung mit haftengebliebenen Gummiresten. In Verbindung mit dem hohen Preis des Aramids ist dies ein erheblicher Kostenfaktor.

Eine Möglichkeit der Abhilfe besteht darin, das Gewebe durch ein gegen Gummi beständiges nicht-haftendes Material nachzubilden. In diesem Simme hat sich Aluminium als sehr geeignet erwiesen. Zur Herstellung einer solchen Nachbildung wird so vorgegangen, daß die schon erwähnte Form mit dem darin eingelegten ursprünglichen Gewebe nicht mit dem Gummi, sondern mit Hartgips ausgegossen wird. Nach dem Abbinden wird der Gips dann mit metallischem Aluminium ausgegossen, wodurch sich die besagte Nachbildung ergibt. Diese Nachbildung kann um ein Vielfaches öfter zur Herstellung der erfindungsgemäßen Oberfläche benutzt werden als das ursprüngliche Gewebe.

## Patentansprüche

1. Naßrutschfeste Oberfläche mit einer Profilierung, **dadurch gekennzeichnet,** **daß** die Profilierung mit Hinterschneidungen (4) versehene Ausnehmungen (3) besitzt.

2. Oberfläche nach Anspruch 1, **dadurch gekennzeichnet, daß** die Profilierung durch den Abdruck eines Gewebes (2) gebildet ist.

3. Oberfläche nach Anspruch 1 oder 2, **dadurch gekennzeichnet, daß** das Gewebe eine Maschenweite im Bereich von 0,05 - 5 mm aufweist.

4. Verfahren zur Herstellung einer naßrutschfesten Oberfläche nach einem der Ansprüche 1 - 3, **dadurch gekennzeichnet, daß** der Boden einer Form mit einer Bahn aus dem besagten Gewebe bedeckt wird, das Material der Oberfläche in die Form eingebracht wird, dann - ggfs. nach einer gewissen Abbindezeit - zusammen mit dem darin oberflächlich eingebetteten Gewebe der Form entnommen wird und schließlich das Gewebe von der Materialöberfläche abgezogen wird.

5. Verfahren nach Anspruch 4, **dadurch gekennzeichnet, daß** ein Gewebe aus Aramidfasern verwendet wird.

6. Verfahren nach Anspruch 4, daß mit Hilfe einer Metallschmelze zunächst eine Nachbildung des Gewebes hergestellt und diese Nachbildung dann zum Erzeugen der Struktur der Oberfläche verwendet wird.
